(19) Europäisches Patentamt
European Patent Office
Office européen des brevets

(11) Veröffentlichungsnummer : **0 338 986 B1**

(12) # EUROPÄISCHE PATENTSCHRIFT

(45) Veröffentlichungstag der Patentschrift : **07.01.93 Patentblatt 93/01**

(51) Int. Cl.5 : **A01N 47/02,** // (A01N47/02, 53:00, 37:42)

(21) Anmeldenummer : **89810278.5**

(22) Anmeldetag : **11.04.89**

(54) **Pflanzenwuchshemmendes Mittel.**

(30) Priorität : **19.04.88 CH 1439/88**
**16.05.88 CH 1837/88**

(43) Veröffentlichungstag der Anmeldung : **25.10.89 Patentblatt 89/43**

(45) Bekanntmachung des Hinweises auf die Patenterteilung : **07.01.93 Patentblatt 93/01**

(84) Benannte Vertragsstaaten : **AT BE CH DE ES FR GB GR IT LI LU NL SE**

(56) Entgegenhaltungen :
**EP-A- 0 224 441**
**FR-A- 2 387 219**
**C.R. WORTHING et al.: "The Pesticide Manual", Auflage 8, 1987, Seite 527, The British Crop Protection Council, ThorntonHeath, GB**

(73) Patentinhaber : **CIBA-GEIGY AG**
**Klybeckstrasse 141**
**CH-4002 Basel (CH)**

(72) Erfinder : **Kerber, Elmar, Dr.**
**Niederwihl 131**
**W-7883 Göhrwil (DE)**
Erfinder : **Leypoldt, Gerhard**
**Ziegelackerweg 5**
**W-7888 Rheinfelden-Herten (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein synergistisch wirkendes Gemisch, welches den Pflanzenwuchs reguliert und aus zwei Wirkstoffkomponenten besteht, ein Mittel welches dieses Gemisch enthält sowie die Verwendung dieses Mittels zu Regulierung, vor allem Hemmung des Wachstums von Gras und Rasen, respektive in Rasen vorkommenden Pflanzen.

Das erfindungsgemässe Mittel besteht aus einem Gemisch von zwei an sich bekannten Wirkstoffkomponenten. Beim ersten Wirkstoff handelt es sich um Cyclohexandioncarbonsäurederivate, welche mit herbizider und den Pflanzenwuchs regulierender Wirkung in der offengelegten Europäischen Patentanmeldung EP-A-126 713 beschrieben sind. Der zweite Wirkstoff ist ein 5-(Trifluormethan-sulfonamido)-aceto-2,4-xylidid welches ebenfalls pflanzenwuchshemmende und herbizide Eigenschaften aufweist. Diese Verbindungen sind einerseits in der U.S. Patentschrift 3,894,078, andererseits in der U.S. Patentschrift 4,208,202 respektive der DE-A 2,815,820 oder dem Französischen Patent 2,387,219 beschrieben.

Ueberraschenderweise vermag die erfindungsgemässe Mischung die Pflanzenwuchs-regulierende respektive hemmende Wirkung der Cyclohexandion-carbonsäurederivate und diejenige der 5-(Trifluormethansulfonamido)-aceto-2,4-xylidide in synergistischer Weise zu steigern.

Das erfindungsgemässe den Pflanzenwuchs regulierende Mittel ist dadurch gekennzeichnet, dass es neben inerten Zutaten als Wirkstoff eine Mischung von

a) einem Cyclohexandioncarbonsäurederivat der Formel I

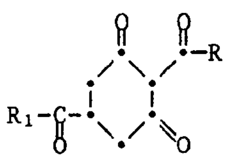

(I),

worin

R $C_1$-$C_4$-Alkyl oder $C_3$-$C_6$-Cycloalkyl,

$R_1$ Hydroxyl, $C_1$-$C_6$-Alkoxy, $C_1$-$C_6$-Halogenalkoxy, $C_2$-$C_{10}$-Alkoxyalkoxy, $C_2$-$C_{10}$-Alkylthioalkoxy oder $C_3$-$C_6$-Alkenyloxy bedeuten oder ein pflanzenphysiologisch verträgliches Metall- oder Ammoniumsalz eines solchen Derivates, und

b) einem 5-(Trifluormethansulfonamido)-aceto-2,4-xylidid der Formel II, enthält,

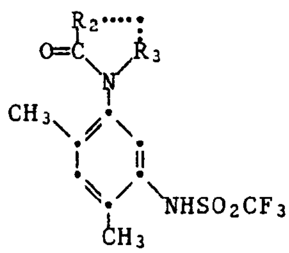

(II),

worin $R_2$ und $R_3$ einzeln je Wasserstoff oder $C_1$-$C_4$-Alkyl, $R_2$ und $R_3$ zusammen ein 2-5 gliedrige Alkylenbrücke, die ein- oder mehrfach durch $C_1$-$C_4$-Alkyl substituiert sein kann, bedeuten.

Bei den als Substituenten in der Alkylenbrücke $R_3$, $R_4$ vorkommenden $C_1$-$C_4$-Alkylresten handelt es sich vorgangsweise um Methyl, Aethyl, Isopropyl und tert.-Butyl.

Die Verbindungen der Formel I sind bekannt, z.B. aus den U.S. Patentschriften 4,584,013, 4,693,745 oder 4,678,496 respektive der EP-A 126,713.

Von der Formel I umfasst sind z.B. die Verbindungen

4-Butanoyl-3,5-cyclohexandion-1-carbonsäureäthylester,
4-Propionyl-3,5-cyclohexandion-1-carbonsäureäthylester,
4-Cyclopropanoyl-3,5-cyclohexandion-1-carbonsäureäthylester,
4-Butanoyl-3,5-cyclohexandion-1-carbonsäureisopropylester,
4-Cyclobutanoyl-3,5-cyclohexandion-1-carbonsäure-tri-n-Butylammonium-Salz,
4-Cyclopentanoyl-3,5-cyclohexandion-1-carbonsäure,
4-Cyclopropanoyl-3,5-cyclohexandion-1-carbonsäure Natriumsalz,

4-Cyclopropanoyl-3,5-cyclohexandion-1-carbonsäure,
4-Cyclopropanoyl-3,5-cyclohexandion-1-carbonsäure-methylester und
4-Cyclobutanoyl-3,5-cyclohexandion-1-carbonsäure.

Die pflanzenphysiologisch verträglichen Metall- und Ammoniumsalze können dabei in folgenden Formen auftreten:

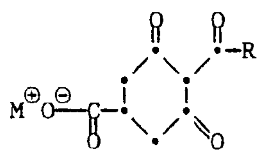
Ia

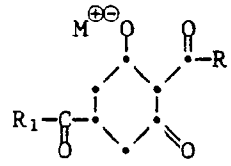
Ib

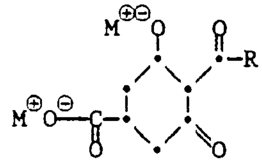
Ic

In diesen Formeln haben R und $R_1$ die obengegebene Bedeutung und $M^{\oplus}$ ist ein Metall- oder Ammoniumkation. Als Metalle kommen die Alkali- und Erdalkalimetalle sowie Aluminium, Kupfer, Nickel, Mangan, Zink, Eisen und Silber in Frage. Ammoniumkatione entsprechen der Formel

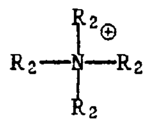
,

wobei die $R_2$ durch Wasserstoff $C_1$-$C_6$-Alkyl, $C_1$-$C_6$-Hydroxyalkyl, $C_2$-$C_6$-Alkoxyalkyl, $C_1$-$C_6$-Halogenalkyl, $C_3$-$C_6$-Alkenyl, Benzyl, Pyridinyl vertreten sein können, zwei $R_2$ können zusammen auch durch eine $C_3$-$C_7$-Alkylenkette bilden, die durch Sauerstoff unterbrochen sein kann.

Von der Formel II umfasst werden z.B. folgende Verbindungen umfasst:
1-(3-Trifluormethansulfonylamido-4,6-dimethyl-phenyl)-acetidin-2-on,
1-(3-Trifluormethansulfonylamido)-4,6-dimethylphenyl)-acetidin-2-on-diäthanolammonium-Salz,
1-(3-Trifluormethansulfonylamido-4,6-dimethylphenyl)-piperidin-2-on,
1-(3-Trifluormethansulfonylamido-4,6-dimethylphenyl)-pyrrolidin-2-on,
1-(3-Trifluormethansulfonylamido-4,6-dimethylphenyl)-5-methyl-pyrrolidin-2-on,
1-(3-Trifluoromethansulfonylamido-4,6-dimethylphenyl)-6-methyl-piperidin-2-on,
1-(3-Trifluormethansulfonylamido-4,6-dimethylphenyl-azepin-2-on und
5-Acetamido-2,4-dimethyl-trifluormethansulfonamid.

Die erfindungsgemässen Mittel besitzen die Eigenschaft, das vegetative Wachstum von Gräsern, Vegetationsmischungen und Unkräutern zu hemmen. Während bei einer totalen Vernichtung von Pflanzenbeständen die Abtragung des Bodens durch Wind und Niederschläge gefördert wird, führt der Einsatz der erfindungsgemässen Mittel zu einer sehr starken Wuchsreduktion, welche die Entstehung oder Erhaltung einer gleichmässigen, niedrigen Pflanzendecke bewirkt und so die Bodenerosion verhindert. In dieses Einsatzgebiet fällt insbesondere die Wachstumsreduktion bei Gräsern bei der Instandhaltung von Grasanpflanzungen, wie sie als Grünanlagen, Obstbaumkulturen, auf Flugplätzen, auf Industriegelände oder an Autostrassen, Eisenbahndämmen oder Uferböschungen von Gewässern angelegt werden. In all diesen Fällen ist normalerweise ein periodisches Schneiden des Rasens bzw. des Grasbewuchses erforderlich. Dies ist nicht nur im Hinblick auf Arbeitskräfte und Maschinen sehr aufwendig, sondern birgt im Verkehrsbereich erhebliche Gefahren für das betroffene Personal und die Verkehrsteilnehmer.

Es besteht daher besonders in den vorgenannten Bereichen ein ausgeprägtes Erfordernis, die zur Erhaltung und Verfestigung des Bodens notwendige Grasnarbe einerseits zu erhalten und zu pflegen, andererseits aber mit einfachen Massnahmen die Pflanzen während der gesamten Vegetationsperiode auf einer mittleren Wuchshöhe zu erhalten.

Ueberraschenderweise hat sich nun gezeigt, dass die erfindungsgemässen Mittel zur Hemmung des Wachstums von Gräsern wie auch von Unkräutern besonders gut geeignet sind. Die Mittel entfalten auch bei variablen Umweltbedingungen ihre Wirkung ausserordentlich rasch und behalten zugleich ihre Wirksamkeit über eine lange Zeitspanne. Die Mittel erweisen sich damit als überlegen gegenüber den Einzelkomponenten. Weitere Vorteile der Mittel sind der Einsatz kleinerer Aufwandmengen nebst günstiger Beeinflussung der Phytotoxizität, eine bessere Totalwirkung und ein breiteres Wirkungsspektrum. Die Wirkung erstreckt sich auf

dicotyle wie monocotyle Pflanzen.

Die erfindungsgemässen Mittel enthalten neben einem Cyclohexandioncarbonsäurederivat der Formel I eine Synergismus erzeugende Menge einer 5-(Trifluormethansulfonamido)-acetoxylidid der Formel I. In der Praxis kann das Mengenverhältnis von Cyclohexandioncarbonsäurederivat der Formel I zu 5-(Trifluormethansulfonamido)-aceto-2,4-xylidid der Formel I in weiten Grenzen variieren. Im allgemeinen liegt das Mengenverhältnis von Wirkstoff der Formel I zu Wirkstoff der Formel II im Bereich von 100:1 bis 1:10, vorzugsweise 10:1 bis 1:1.

In der Regel werden Aufwandmengen verwendet, die den nachfolgend angegebenen entsprechen:
0,1 bis 5 kg Aktivsubstanz pro Hektar Wirkstoffkomponente der Formel I und 0,1 bis 2 kg/ha Wirkstoffkomponente der Formel II.

Die Herstellung dieser Cyclohexandion-Carbonsäurederivate ist nicht Bestandteil dieser Erfindung, ihre Herstellung und Verwendung als Herbizide und zur Regulierung des Pflanzenwachstums ist z.B. in der offengelegten Europäischen Patentanmeldung 126 713 beschrieben.

Das folgende Beispiel dient zur Erläuterung der Herstellung der Verbindungen der Formel I.

Beispiel 1: Herstellung von 4-Buturyl-3,5-cyclohexandioncarbonsäureisobutylester

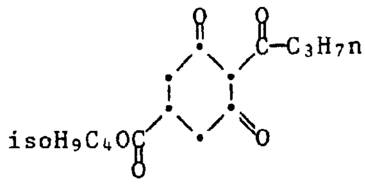

a) 3,5-Cyclohexandioncarbonsäureisobutylester

Man kocht über nacht am Wasserabscheider ein Gemisch von 50 g 3,5-Cyclohexandioncarbonsäure, 150 ml Isobutanol, 30 g 85%ige ortho Phosphorsäure und 400 ml Toluol. Die Lösung wird dann am Rotationsverdampfer eingeengt. Der Rückstand wird in 200 ml Tetrahydrofuran aufgenommen, mit 100 ml 1N Salzsäure versetzt und während 2 Stunden gekocht. Nach dem Abkühlen wird Essigester zugegeben. Die organische Phase wird abgetrennt, mit gesättigter Kochsalzlösung gewaschen, getrocknet und eingedampft. Es verbleibt ein wachsartiger Rückstand, der aus Aether/Hexan umkristallisiert wird und bei 74-76°C schmilzt.

b) 4-Buturyl-3,5-cyclohexandioncarbonsäureisobutylester

Zu einer Lösung von 60 g 3,5-Cyclohexandioncarbonsäureisobutylester und 25 ml Pyridin in 400 ml Dichloräthan tropft man 30 ml Buttersäurechlorid und rührt bei Raumtemperatur 15 Stunden weiter. Die Reaktionslösung wird dann filtriert, mit 1N Salzsäure gewaschen, getrocknet und eingeengt. Das so erhaltene O-acylierte Produkt wird in 200 ml Dichloräthan aufgenommen, mit 4 g 4-Dimethylaminopyridin versetzt und 4 Stunden am Rückfluss gekocht. Die abgekühlte Reaktionslösung wird dann mit verdünnter 1n-Salzsäure gewaschen, getrocknet, eingeengt und an wenig Kieselgel chromatographiert. Man erhält so 51 g 4-Buturyl-3,5-cyclohexan dioncarbonsäure-isobutylester als helles Oel, welches einen Brechungsindex $n_D^{21}$1.4907 aufweist.

In analoger Weise zu diesem Beispiel werden folgende Verbindungen erhalten:

Tabelle 1

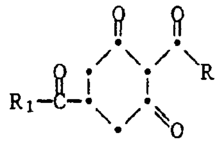

| No. | $R_1$ | R | phys. Daten |
|---|---|---|---|
| 1.01 | $OCH_3$ | $C_3H_7$-n | $n_D^{25}$ 1.5085 |
| 1.02 | $OC_2H_5$ | $C_3H_7$-n | $n_D^{27}$ 1.5060 |
| 1.03 | $OCH_2CH(CH_3)_2$ | $C_3H_7$-n | $n_D^{27}$ 1.4907 |
| 1.04 | $OC_2H_5$ | $CH_3$ | Smp. 49-51°C |
| 1.05 | $OC_2H_5$ | $C_5H_{11}$-n | $n_D^{20}$ 1.4908 |
| 1.06 | $OC_2H_5$ | $C(CH_3)_3$ | Smp. 74-75°C |
| 1.07 | $OC_2H_5$ | $CH(CH_3)_2$ | Sdp. 110°C/0.001 mbar |
| 1.08 | OH | $CH(CH_3)_2$ | Smp. 132°C |
| 1.09 | OH | $CH_2CH(CH_3)_2$ | Smp. 124-125°C |
| 1.10 | $OC_2H_5$ | $CH_2CH(CH_3)_2$ | Oel |
| 1.11 | $OC_2H_5$ | $C_2H_5$ | Smp. 40°C |
| 1.12 | OH | $C_3H_7$-n | Smp. 120-135°C |
| 1.13 | OH | $C_2H_5$ | Smp. 122-123°C |
| 1.14 | $OC_2H_5$ | Cyclopropyl | $n_D^{30}$ 1.5350 |
| 1.15 | $OC_2H_5$ | Cyclobutyl | Smp. 60-61°C |
| 1.16 | $OC_2H_5$ | Cyclopentyl | Oel |
| 1.17 | $OC_2H_5$ | Cyclohexyl | Oel |
| 1.18 | $OCH_3$ | Cyclopropyl | Smp. 60-64°C |
| 1.19 | $OCH(CH_3)_2$ | Cyclopropyl | Smp. 70-72°C |
| 1.20 | $OCH_2CH(CH_3)_2$ | Cyclopropyl | $n_D^{21}$ 1.4907 |
| 1.21 | OH | Cyclopropyl | Smp. 142-146°C |
| 1.22 | OH | Cyclopentyl | Smp. 95-103°C |
| 1.23 | OH | Cyclohexyl | Smp. 155-158°C |
| 1.24 | OH | Cyclopropyl-tri-n-butylammonium-Salz | Oel |
| 1.25 | $OCH_2SCH_3$ | $C_3H_7$-n | $n_D^{27}$ 1.5060 |

Die folgenden Beispiele dienen der Erläuterung der Herstellung der Verbindungen der Formel II.

Beispiel 2: Herstellung von 5-Acetamido-2,4-dimethyl-trifluormethansulfonanilid

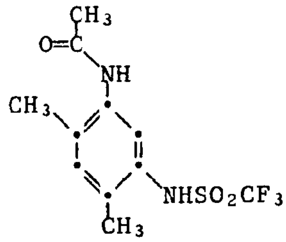

Eine Lösung von 174 g (2,45 Mol) Trimethylamin, 129 g (0,862 Mol) Trifluoromethansulfonylfluorid 175 ml Aethylacetat und 105 g (0,59 Mol) 5-Amino-2,4-dimethylacetanilid werden während einem Tag in ca. 1 l 10%iger wässriger Natriumhydroxidlösung gekocht. Das Reaktionsgemisch wird dann einer Wasserdampfdestillation unterworfen, bis keine basischen Anteile mehr übergehen. Dann wird im Eisbad gekühlt, unlösliche Verunreinigungen werden abfiltriert, das Filtrat mit verdünnter Salzsäure angesäuert bis ein gelblicher Niederschlag ausfällt. Dieser wird genutscht, getrocknet und aus Acetonitril umkristallisiert. Man erhält so kristallines Titelprodukt. Schmelzpunkt 181-184°C.

Beispiel 3: Herstellung von 1-(3′-Trifluormethansulfonamido-4′,-6′-dimethyl-phenyl)-pyrrolidin-2-on

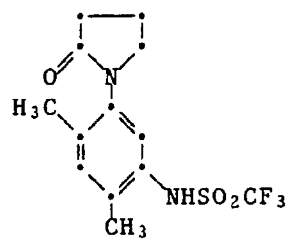

Zu einer Lösung von 20,4 g (0,1 Mol) 1-(3′-Amino-4′,6′-dimethylphenyl)-pyrrolidin-2-on und 12 g Triäthylamin (0,11 Mol) in 200 ml Chloroform werden unter Rühren bei -40°C 30 g (0,106 Mol) Trifluormethansulfonsäureanhydrid innert 40 Minuten getropft. Dann lässt man die Temperatur auf Raumtemperatur ansteigen und erhitzt noch kurz auf Rückflusstemperatur. Die Lösung wird mit 1N-Kaliumhydroxid-Lösung extrahiert. Der wässerige Extrakt wird filtriert und mit konzentrierter Salzsäure sauer gestellt. Das so gefällte Produkt wird abfiltriert und mit Wasser gewaschen. Man trocknet im Exsikator bei 70°. Ausbeute 16,4 g (49 %). Schmelzpunkt 217-221°C.

Das Diäthanolaminsalz ist ein viskoses Oel.

In analoger Weise zu den Beispielen werden folgende Verbindungen der Formel II erhalten:

Tabelle 2

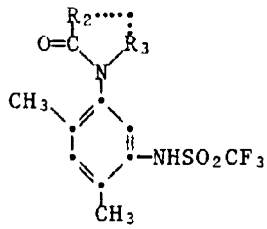

| No. | $R_2$ | $R_3$ | Salz | phys. Daten |
|---|---|---|---|---|
| 2.01 | $CH_3$ | H | - | Smp. 181-184°C |
| 2.02 | $-(CH_2)_2-$ | | - | Smp. 137-139°C |
| 2.03 | $-(CH_2)_2-$ | | Diäthanaloamin | viskoses Oel |
| 2.04 | $-CH(CH_3)CH_2-$ | | - | Smp. 240-241°C |
| 2.05 | $-CH(C_2H_5)CH_2-$ | | - | Smp. 194°C |
| 2.06 | $-CH_2CH(CH_3)-$ | | - | Smp. 243-245°C |
| 2.07 | $-(CH_2)_3-$ | | - | Smp. 217-221°C |
| 2.08 | $-(CH_2)_3-$ | | Diäthanolamin | viskoses Oel |
| 2.09 | $-CH(CH_3)CH_2CH_2-$ | | - | Smp. 150-151°C |
| 2.10 | $-CH_2CH_2CH(CH_3)-$ | | - | Smp. 170-171°C |
| 2.11 | $-(CH_2)_4-$ | | - | Smp. 260-266°C |
| 2.12 | $-(CH_2)_4-$ | | Diäthanolamin | viskoses Oel |
| 2.13 | $-(CH_2)_5-$ | | - | Smp. 237-238°C |
| 2.14 | $-(CH_2)_5-$ | | Diäthanolamin | viskoses Oel |

In der Praxis haben Wirkstoffgemische eines der oben einzeln aufgeführten Cyclohexandioncarbonderivate und eines der oben einzeln aufgeführten 5-(Trifluormethansulfonamido)-aceto-xylididen sehr gute Wirkung gezeigt, besonders aber die Kombination 4-(Cyclopropylcarbonyl)-cyclohexan-3,5-dion-1-carbonsäure-äthylester (Verbindung 1.14) und 5-(Trifluoromethansulfonamido)-2,4-dimethylacetanilid (Verbindung 2.01) oder 5-(Trifluoromethansulfonamido)-2,4-dimethylpyrrolidin-2-on (Verbindung 2.07).

Pflanzenwuchsregulierende Stoffe können zum Beispiel zur Hemmung des vegetativen Pflanzenwachstums eingesetzt werden. Eine derartige Wuchshemmung ist unter anderem bei Gräsern von wirtschaftlichem Interesse, denn dadurch kann z.B. die Häufigkeit der Grasschnitte in Ziergärten, Park- und Sportanlagen oder an Strassenrändern reduziert werden. Von Bedeutung ist auch die Hemmung des Wuchses von krautigen und holzigen Pflanzen an Strassenrändern und in der Nähe von Ueberlandleitungen oder ganz allgemein in Bereichen, in denen ein starker Bewuchs unerwünscht ist.

Ein weiteres wichtiges Anwendungsgebiet für Wuchshemmer ist deren Einsatz zur Hemmung eines übermässigen Wachstums bei tropischen Bodenbedeckungspflanzen, den sogenannten Cover crops. In tropischen und subtropischen Monokulturen, wie z.B. in Palmplantagen, Baumwoll-, Maisfeldern usw. werden neben den eigentlichen Kulturpflanzen oftmals Bodenbedeckungspflanzen, insbesondere Leguminosenarten angepflanzt, die zur Erhaltung oder Steigerung der Bodenqualität (Verhinderung der Austrocknung, Versorgung mit Stickstoff) und zur Verhinderung von Erosion (Abtragung durch Wind und Wasser) dienen. Durch Applikation der erfindungsgemässen Wirkstoffe kann nunmehr das Wachstum dieser Cover crops kontrolliert und somit die Wuchshöhe dieser Bodenbedeckungspflanzen auf einem niedrigen Niveau gehalten werden, so dass ein gesundes Gedeihen der Kulturpflanzen und die Aufrechterhaltung einer günstigen Bodenbeschaffenheit gewährleistet ist.

Die erfindungsgemässen Gemische der Wirkstoffkomponenten werden in unveränderter Form oder vozugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Verneblen, Verstäuben, Verstreuen oder Giessen werden gleich wie die Art der Mittel den angestrebten Zielen und den gegebenen Verhältnissen entsprechend gewählt.

Die Formulierungen d.h. die den Wirkstoff der Formeln I und II und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Di-octylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydiertes Kokossnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffgemisches nichtionogene, kation-und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen wie wasserlösliche synthetische oberflächenaktive Verbindungen sein.

Als Seifen sind z.B. die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Koskosnuss- oder Talgöl gewonnen werden können. Ferner sind auch die Fettsäure-methyl-taurin-salze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyd-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxyd-Adduktes oder Phospholipide in Frage.

Als nichtionisches Tensid kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 1000 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxyaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Poyloxyäthylensorbitan-trioleat in Betracht.

Bei den kationischen Tensiden handelt es sich vor allem um quartäre Ammoniumsalzue, welche als N-Substituenten mindestens einen Alkylrest mit 8 bis 22 C-Atomen enthalten und als weitere Substituenten niedrige,

gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi-(2-chloräthyl)-äthylammoniumbromid.

Die in der Formulierungstechnik gebräuchlichen Tenside sind u.a. in folgenden Publikationen beschrieben:

"Mc Cutcheon's Detergents and Emulsifiers Annual"
MC Publishing Corp., Ridgewood, New Jersey, 1979
J. and M. Ash, "Encyclopedia of Surfactants" Vol. I-III,
Chemical Publishing Co., Inc. New York, 1980-81
H. Stache "Tensid Taschenbuch", 2. Auflage,
C. Hanser Verlag, München und Wien 1981.

Die erfindungsgemässen Zubereitungen enthalten in der Regel 0,1 bis 95 %, insbesondere 0,1 bis 80 %, der erfindungsgemässen Wirkstoffkombination neben 1 bis 99,9 % eines festen oder flüssigen Zusatzstoffes und/oder 0 bis 25 %, insbesondere 0,1 bis 25 % eines Tensides.

Insbesondere setzen sich bevorzugte Formulierungen folgendermassen zusammen: (% = Gewichtsprozent).

Emulgierbare Konzentrate

| | |
|---|---|
| Wirkstoffgemisch: | 1 bis 20 %, bevorzugt 5 bis 10 % |
| obeflächenaktives Mittel: | 5 bis 30 %, vorzugsweise 10 bis 20 % |
| flüssiges Trägermittel: | 50 bis 94 %, vorzugsweise 70 bis 85 % |

Stäube

| | |
|---|---|
| Wirkstoffgemisch: | 0,1 bis 10 %, vorzugsweise 0,1 bis 1 % |
| festes Trägermaterial: | 99,9 bis 90 %, vorzugsweise 99,9 bis 90 %. |

Suspension-Konzentrate

| | |
|---|---|
| Wirkstoffgemisch: | 5 bis 75 %, vorzugsweise 10 bis 50 % |
| Wasser: | 94 bis 25 %, vorzugsweise 90 bis 30 % |
| oberflächenaktives Mittel: | 1 bis 40 %, vorzugsweise 2 bis 30 %. |

Benetzbare Pulver

| | |
|---|---|
| Wirkstoffgemisch: | 0,5 bis 90 %, vorzugsweise 1 bis 80 % |
| oberflächenaktives Mittel: | 0,5 bis 20 %, vorzugsweise 10 bis 20 % |
| flüssiges Trägermaterial: | 5 bis 95 %, vorzugsweise 15 bis 90 % |

Granulate

| | |
|---|---|
| Wirkstoffgemisch: | 0,5 bis 30 %, vorzugsweise 3 bis 15 % |
| festes Trägermittel: | 99,5 bis 70 %, vorzugsweise 99 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,01 bis 10 kg/ha, vorzugsweise 0,025 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Beispiel 4:

Formulierungsbeispiele für das erfindungsgemässe Mittel

(Prozentangaben beziehen sich auf das Gewicht)

| a) Spritzpulver | a) | b) | c) |
|---|---|---|---|
| Wirkstoffgemisch bestehend aus 1000 Teilen der Verbindung 1.14 und 10 Teilen der Verbindung 2.01 oder 50 Teilen der Verbindung 2.02 | 20 % | 60 % | 0,5 % |
| Na-Ligninsulfonat | 5 % | 5 % | 5 % |
| Na-Laurylsulfat | 3 % | --- | --- |
| Na-Diisobutylnapthylinsulfonat | --- | 6 % | 5 % |
| Octylphenolpolyäthylenglykoläther (7-8 mol AeO) | --- | 2 % | 2 % |
| Hochdisperse Kieselsäure | 5 % | 27 % | 27 % |
| Kaolin | 67 % | --- | --- |
| Natriumchlorid | --- | --- | 60,5 % |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsion-Konzentrat | a) | b) |
|---|---|---|
| Wirkstoffgemisch bestehend aus 2 Teilen der Verbindung 1.14 und 1 Teil der Verbindung 2.01 oder 2.02 | 10 % | 1 % |
| Octylphenolpolyäthylenglykoläther (4-5 mol AeO) | 3 % | 3 % |
| Ca-Dodecylbenzolsulfonat | 3 % | 3 % |
| Ricinusölpolyglykoläther (36 mol AeO) | 4 % | 4 % |
| Cyclohexanon | 30 % | 10 % |
| Xylolgemisch | 50 % | 79 % |

Aus diesem Konentrat können durch Verdünnen mit Wasser Emulsionen jeder gewünschten Konzentration hergestellt werden.

| c) Stäubemittel | a) | b) |
|---|---|---|
| Wirkstoffgemisch bestehend aus 3 Teilen der Verbindung 1.14 und 1 Teil der Verbindung 2.01 oder 2.02 | 0,1 % | 1 % |
| Talkum | 99,9 % | --- |
| Kaolin | --- | 99 % |

Man erhält anwendungsfertige Stäubemittel, indem der Wirkstoff mit dem Träger vermischt und auf einer geeigneten Mühle vermahlen wird.

| d) Extruder-Granulat | a) | b) |
|---|---|---|
| Wirkstoffgemisch bestehend aus 4 Teilen der Verbindung 1.14 und 1 Teil der Verbindung 2.01 oder 2.02 | 10 % | 1 % |
| Na-Ligninsulfonat | 2 % | 2 % |
| Carboxymethylcellulose | 1 % | 1 % |
| Kaolin | 87 % | 96 % |

Der Wirkstoff wird mit den Zusatzstoffen vermischt, vermahlen und mit Wasser angefeuchtet. Dieses Gemisch wird extrudiert und anschliessend im Luftstrom getrocknet.

e) Umhüllungs-Granulat

| | |
|---|---|
| Wirkstoffgemisch bestehend aus 15 Teilen der Verbindung 1.14 und 1 Teil der Verbindung 2.01 oder 2.02 | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoffgemisch bestehend aus 30 Teilen der Verbindung 1.14 und 1 Teil der Verbindung 2.01 oder 2.02 | 40 % | 5 % |
| Aethylenglykol | 10 % | 10 % |
| Nonylphenolpolyäthylenglykoläther (15 mol AeO) | 6 % | 1 % |
| Na-Ligninsulfonat | 10 % | 5 % |
| Carboxymethylcellulose | 1 % | 1 % |
| 37%ige wässrige Formaldehyd-Lösung | 0,2 % | 0,2 % |
| Silikönöl in Form einer 75%igen wässrigen Emulsion | 0,8 % | 0,8 % |
| Wasser | 32 % | 77 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Die folgenden Beispiele sollen die biologische Wirkung der erfindungsgemässen Gemische näher erläutern.

Beispiel 5: Wuchshemmung bei Gräsern und Klee

In Kunststofftöpfen mit Erde-Torf-Sand-Gemisch (6:3:1) werden die Gräser Lolium perenne, Poa pratensis, Festuca ovina, Dactylis glomerata, Bromus inermis, Cynosurus cristatus, sowie die zwei Kleearten Trifolium repens und Trifolium pratense als Mischung angesät und im Gewächshaus angezogen. Bewässerung, Temperaturregelung und Beleuchtung erfolgen nach Bedarf. Die aufgelaufenen Pflanzen werden wöchentlich auf 4 cm Höhe zurückgeschnitten und ca. 50 Tage nach der Aussaat und einen Tag nach dem letzten Schnitt mit der wässrigen Spritzbrühe des Wirkstoffes der Formel I, des Wirkstoffes der Formel II und einer Mischung beider Komponenten besprüht. Die Aufwandmengen in g Aktivsubstanz pro Hektar sind der nachfolgenden Tabelle 3 zu entnehmen, die Menge Wasser beträgt 500 l/Hektar. 28 Tage nach Applikation wird das Längenwachstum ausgewertet. Die Wirkung der Substanzen respektive der Substanzgemische wird ausgedrückt in Prozent Wuchshemmung, bezogen auf die unbehandelte Kontrolle; normales Wachstum = 0 % Wuchsreduktion, Wuchsstop = 100 % Wuchsreduktion oder Wirkung.

Die Ergebnisse sind in der untenstehenden Tabelle 3 getrennt nach Gras-und Kleearten aufgeführt. Es zeigt sich, dass die Mischungen der Verbindungen der Formeln I und II synergistisch wirken und deutlich über dem aus den Wirkungen der Einzelverbindungen zu erwartenden Resultat liegen.

Ein synergistischer Effekt liegt dann vor, wenn die wuchshemmende Wirkung der Wirkstoffkombination I + II grösser ist als die Summe aus der Wirkung der einzeln applizierten Wirkstoffe.

Das zu erwartende Pflanzenwachstum E für eine gegebene Kombination zweier Wirksubstanzen kann (vgl COLBY, S.R., "Calculating synergistic and antagonistic response of herbicide combinations", Weeds 15, Seiten 20-22, 1967) wie folgt berechnet werden:

$$E = X + \frac{Y \cdot (100 - X)}{100}$$

Dabei bedeuten:

X = Prozent Wuchshemmung (im Vergleich zu unbehandelten Pflanzen) bei Behandlung mit einem Produkt I mit p kg Aufwandmenge pro Hektar,

Y = Prozent Wuchshemmung bei Behandlung mit einem Produkt II mit q kg Aufwandmenge pro Hektar

E = Erwartete Wuchshemmung in Prozent zu den Kontrollpflanzen nach Behandlung mit dem Gemisch I + II bei einer Aufwandmenge von p + q kg Wirkstoffmenge pro Hektar.

Ist der tatsächlich beobachtete Wert höher als der zu erwartende Wert E, so liegt Synergismus vor.

Die Wuchshemmung im Vergleich zu unbehandelten Kontrollen (0 %) und der synergistische Effekt der Kombination der Wirkstoffe I und II wird in der Tabelle 3 gezeigt.

Tabelle 3

| Wirkstoff | Aufwandmenge | Wuchshemmung | nach Colby zu erwarten |
|---|---|---|---|
| | Gräser | | |
| Verbindung 1.14 | 500 g/ha | 9 % | |
| | 750 g/ha | 24 % | |
| Verbindung 2.01 | 125 g/ha | 14 % | |
| | 250 g/ha | 39 % | |
| Mischung 1.14 + 2.01 | 500 + 125 g/ha | 65 % | 21 % |
| | 500 + 250 g/ha | 80 % | 45 % |
| | 750 + 125 g/ha | 67 % | 35 % |
| | 750 + 250 g/ha | 87 % | 54 % |
| | Klee | | |
| Verbindung 1.14 | 500 g/ha | 2 % | |
| | 750 g/ha | 14 % | |
| Verbindung 2.01 | 125 g/ha | 4 % | |
| | 250 g/ha | 8 % | |
| Mischung 1.14 + 2.01 | 500 + 125 g/ha | 6 % | 6 % |
| | 500 + 250 g/ha | 37 % | 10 % |
| | 750 + 125 g/ha | 37 % | 17 % |
| | 750 + 250 g/ha | 45 % | 21 % |

Beispiel 6: Wuchshemmung in Gerste

Sommergerste (Hordeum vulgare der Sorte "Iban") wird in Kunststofftöpfen ausgesät und im Gewächshaus bis zum Applikationszeitpunkt herangezogen. Ca. 35 Tage nach Aussaat werden die Pflanzen mit einer wässringen Spritzbrühe (500 Liter/Hektar) der Wirkstoffe der Formeln I und II mit den in Tabelle 4 dargestellten Aufwandmengen jeweils alleine und Mischungen besprüht. Die Auswertung des Versuchs erfolgt 28 Tage nach Applikation. Die Wirkung der Prüfsubstanzen wird angegeben als Prozent Wuchshemmung des Neuzuwachses im Vergleich zu unbehandelten Kontrollen (0 % = keine Wirkung 100 % = vollständiger Wachstumsstop). Die Ergebnisse sind in der untenstehende Tabelle 4 dargestellt. Mischungen der Verbindungen der Formel I und II zeigen synergistische Wirkung, welche dem aus der Einzelwirkung der Verbindungen zu erwartenden Resultat deutlich überlegen ist.

Tabelle 4

| Wirkstoff | Auwandmenge | Wuchshemmung | nach Colby zu erwarten |
|---|---|---|---|
| Verbindung 1.14 | 125 g/ha | 17 % | |
| | 250 g/ha | 43 % | |
| Verbindung 2.01 | 60 g/ha | 0 % | |
| | 125 g/ha | 8 % | |
| Verbindung 2.02 | 60 g/ha | 2 % | |
| | 125 g/ha | 22 % | |
| Mischung 1.14 + 2.01 | 125 + 60 g/ha | 45 % | 17 % |
| | 125 + 125 g/ha | 59 % | 24 % |
| | 250 + 60 g/ha | 84 % | 43 % |
| | 250 + 125 g/ha | 94 % | 48 % |
| Mischung 1.14 + 2.02 | 125 + 60 g/ha | 41 % | 19 % |
| | 125 + 125 g/ha | 61 % | 35 % |
| | 250 + 60 g/ha | 65 % | 44 % |
| | 250 + 125 g/ha | 68 % | 55 % |

Beispiel 7: Wuchshemmung in Soja

In Kunststofftöpfen mit einem Erde/Torf/Sandgemisch (6/3/1) werden Samen von Sojapflanzen (Glycine max., Sorte "Maple Arrow") angesät und in der Klimakammer angezogen. Bewässerung, Temperaturregelung und Beleuchtung erfolgen nach Bedarf. Im Dreiblattstadium (ca. 20 Tage nach der Saat) werden Wirkstoffe der Formeln I und II mit den in Tabelle 5 dargestellten Aufwandmengen jeweils alleine und in Mischungen mit einer Wasseraufwandmenge vom 500 Liter pro Hektar appliziert. Der Versuch wird 14 Tage nach Applikation ausgewertet, die Substanzwirkung wird als Prozent Wuchshemmung des Neuzuwachses im Vergleich zu unbehandelten Kontrollpflanzen (0 % = keine Wirkung, 100 % = vollständiger Wachstumsstop) ermittelt. Die Ergebnisse sind in der untenstenden Tabelle 5 aufgeführt. Es zeigt sich, dass die Mischungen der Verbindungen I + II synergistisch wirken und deutlich über dem aus den Wirkungen der Einzelverbindungen zu erwartenden Resultat liegen.

Tabelle 5

| Wirkstoff | Auwandmenge | Wuchshemmung | nach Colby zu erwarten |
|---|---|---|---|
| Verbindung 1.14 | 500 g/ha<br>1000 g/ha | 12 %<br>55 % | |
| Verbindung 2.01 | 60 g/ha<br>125 g/ha | 0 %<br>5 % | |
| Verbindung 2.02 | 7.5 g/ha<br>15 g/ha | 0 %<br>3 % | |
| Mischung 1.14 + 2.01 | 500 + 60 g/ha<br>500 + 125 g/ha<br>1000 + 60 g/ha<br>1000 + 125 g/ha | 25 %<br>71 %<br>70 %<br>81 % | 12 %<br>16 %<br>55 %<br>57 % |
| Mischung 1.14 + 2.02 | 500 + 7.5 g/ha<br>500 + 15 g/ha<br>1000 + 7.5 g/ha<br>1000 + 15 g/ha | 31 %<br>45 %<br>74 %<br>84 % | 12 %<br>15 %<br>55 %<br>56 % |

## Patentansprüche

1. Ein den Pflanzenwuchs regulierendes Mittel, dadurch gekennzeichnet, dass es neben inerten Zusätzen als Wirkstoffkomponenten eine Mischung aus

   a) einem Cyclohexandioncarbonsäurederivat der Formel I

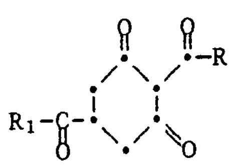

(I),

worin

R $C_1$-$C_4$-Alkyl oder $C_3$-$C_6$ Cycloalkyl, $R_1$ Hydroxyl, $C_1$-$C_6$-Alkoxy, $C_1$-$C_6$-Halogenalkoxy, $C_2$-$C_{10}$-Alkoxyalkoxy, $C_2$-$C_{10}$-Alkylthioalkoxy, $C_3$-$C_6$-Alkenyloxy bedeuten, oder ein pflanzenphysiologisch verträgliches Metall-oder Ammoniumsalz eines solchen Derivates, und

b) einem 5-(Trifluoromethansulfonamido)-aceto-2,4-xylidid der Formel II enthält

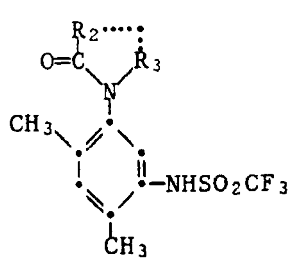

(II)

worin $R_2$ und $R_3$ einzeln je Wasserstoff oder $C_1$-$C_4$-Alkyl, $R_2$ und $R_3$ zusammen eine 2-5 gliedrige Alkylenbrücke, die ein- oder mehrfach durch $C_1$-$C_4$-Alkyl substituiert sein kann bedeuten.

2. Mittel gemäss Anspruch 1, dadurch gekennzeichnet, dass es ein Cyclohexandion-carbonsäurederivat der Formel I

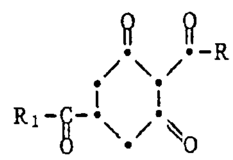

(I)

worin R $C_1$-$C_4$-Alkyl oder $C_3$-$C_6$-Cycloalkyl und $R_1$ Hydroxyl oder $C_1$-$C_6$-Alkoxy bedeutet und als Mischpartner 5-(Trifluoromethansulfonamido)-aceto-2,4-xylidid der Formel

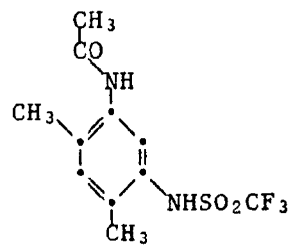

.

3. Mittel gemäss Anspruch 1, dadurch gekennzeichnet,dass es ein Cyclohexandion-carbonsäurederivat der Formel I enthält

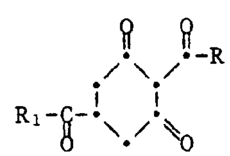

(I)

worin R $C_1$-$C_4$-Alkyl oder $C_3$-$C_6$-Cycloalkyl und $R_1$ Hydroxyalkyl oder $C_1$-$C_6$-Alkoxy bedeutet und als Mischpartner ein 5-(Trifluoromethansulfonamido)aceto-2,4-xylidid der Formel II

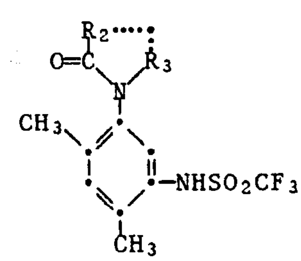

(II)

worin $R_2$ und $R_3$ zusammen eine 2-5-gliedrige Alkylenbrücke, die ein- oder mehrfach durch $C_1$-$C_4$-Alkyl substituiert sein kann, bedeuten.

4. Mittel gemäss Anspruch 1, dadurch gekennzeichnet, dass es ein Cyclohexandion-carbonsäurederivat der Formel I enthält

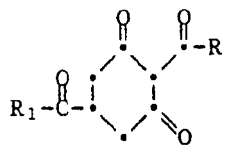

(I)

worin R $C_1$-$C_4$-Alkyl oder $C_3$-$C_6$-Cycloalkyl und $R_1$ Hydroxyl oder $C_1$-$C_6$-Alkoxy bedeutet und als Mischpartner eine Verbindung ausgewählt aus 5-(Trifluoromethansulfonamido)-aceto-2,4-xylidid und 5-(Trifluoromethansulfonamido)-2,4-dimethylphenyl-pyrrolidin-2-on.

5. Mittel gemäss Anspruch 1, dadurch gekennzeichnet, dass es als Wirkstoff eine Mischung aus 4-Cyclopropanoyl-3,5-cyclohexandion-1-carbonsäureäthylester einerseits und 5-(Trifluoromethansulfonamido)-aceto-2,4-xylidid oder 5-(Trifluoromethansulfonamido)-2,4-dimethylphenyl-pyrrolidin-2-on andererseits enthält.

6. Mittel gemäss Anspruch 1, dadurch gekennzeichnet, dass es als Wirkstoff eine Mischung von 4-Cyclopropanoyl-3,5-cyclohexandion-1-carbonsäureäthylester und 5-(Trifluoromethansulfonamido)-aceto-2,4-xylidid enthält.

7. Mittel gemäss Anspruch 1, dadurch gekennzeichnet, dass es als Wirkstoff eine Mischung von 4-Cyclopropanoyl-3,5-cyclohexandion-1-carbonsäureäthylester und 5-(Trifluoromethansulfonamido)-2,4-dimethylphenyl-pyrrolidin-2-on enthält.

8. Mittel gemäss Anspruch 1, dadurch gekennzeichnet, dass es als Wirkstoff eine Mischung 4-Propionyl-3,5-cyclohexandion-1-carbonsäureäthylester einerseits und 5-(Trifluormethansulfonamido)-aceto-2,4-xylidid oder 5-(Trifluoromethansulfonamido)-2,4-dimethylphenyl-pyrrolidin-2-on andererseits enthält.

9. Mittel gemäss Anspruch 1, dadurch gekennzeichnet, dass als Wirkstoff eine Mischung aus 4-Propionyl-3,5-cyclohexandion-1-carbonsäureester und 5-(Trifluoromethansulfonamido)-2,4-dimethylphenyl-pyrrolidin-2-on enthält.

10. Mittel gemäss Anspruch 1, dadurch gekennzeichnet, dass es als Wirkstoff eine Mischung aus 4-Cyclopropanoyl-3,5-cyclohexandion-1-carbonsäureäthylester und 5-(Trifluormethansulfonamido-aceto-2,4-xylidid enthält.

11. Mittel gemäss Anspruch 1 enthaltend die Wirkstoffkomponenten I und II im Verhältnis von 100:1 bis 1:10, vorzugsweise ein Verhältnis 10:1 bis 1:1.

12. Verfahren zur Regulierung, respektive Hemmung des Pflanzenwuchses nach dem 2-Blatt-Stadium, dadurch gekennzeichnet, dass man Pflanzen, Pflanzenteile oder Samen mit einer wirksamen Menge des Mittels gemäss Anspruch 1, behandelt.

13. Verfahren zur Hemmung des Wachstums von Gräsern, Vegetationsmischungen und Unkräutern, dadurch gekennzeichnet, dass man eine wirksame Menge des Mittels gemäss Anspruche 1 auf Rasen oder eine mit Gräsern und/oder Unkräutern bewachsene Fläche appliziert.

14. Die Verwendung des Mittels gemäss Anspruch 1 zur Regulierung des Pflanzenwuchses in Zuckerrohr-, Getreide-, Mais-, Soja-, Reis- oder Baumwollkulturen oder bei Bodenbedecker-Leguminosen.

15. Verwendung des Mittels gemäss Anspruch 1, zur Wuchshemmung, im Sinne einer Erhöhung der Knickfestigkeit und Halmverkürzung bei den Getreidesorten Hafer, Weisen, Roggen oder Gerste und zur Erhöhung der Standfestigkeit und des Ertrages in Kulturen von Soja.

**Claims**

1. A plant growth regulating composition, which comprises, together with inert additives, as active components a mixture consisting of
   a) a cyclohexanedionecarboxylic acid derivative of formula I

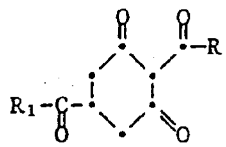

(I)

wherein R is $C_1$-$C_4$alkyl or $C_3$-$C_6$cycloalkyl, $R_1$ is hydroxyl, $C_1$-$C_6$alkoxy, $C_1$-$C_6$haloalkoxy, $C_2$-$C_{10}$alkoxyalkoxy, $C_2$-$C_{10}$alkylthioalkoxy or $C_3$-$C_6$alkenyloxy, or a phytophysiologically tolerable metal or ammonium salt of such a derivative, and

b) a 5-(trifluoromethanesulfonamido)-aceto-2,4-xylidide of formula II

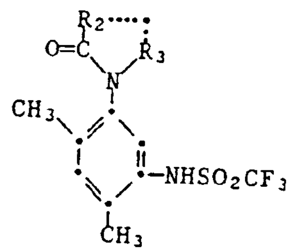

(II)

wherein each of $R_2$ and $R_3$ separately is hydrogen or $C_1$-$C_4$alkyl or $R_2$ and $R_3$ together are a 2- to 5-membered alkylene bridge that can be mono- or polysubstituted by $C_1$-$C_4$alkyl.

**2.** A composition according to claim 1, which comprises a cyclohexanedionecarboxylic acid derivative of formula I

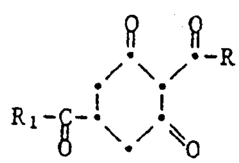

(I)

wherein R is $C_1$-$C_4$alkyl or $C_3$-$C_6$cycloalkyl and $R_1$ is hydroxyl or $C_1$-$C_6$alkoxy and as mixing partner 5-(trifluoromethanesulfonamido)-aceto-2,4-xylidide of the formula

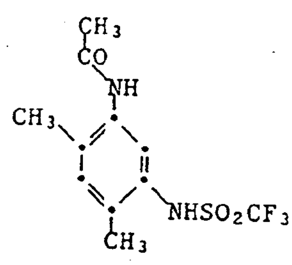

.

**3.** A composition according to claim 1, which comprises a cyclohexanedionecarboxylic acid derivative of formula I

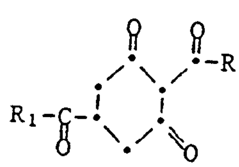

(I)

wherein R is $C_1$-$C_4$alkyl or $C_3$-$C_6$cycloalkyl and $R_1$ is hydroxyalkyl or $C_1$-$C_6$alkoxy and as mixing partner

5-(trifluoromethanesulfonamido)-aceto-2,4-xylidide of formula II

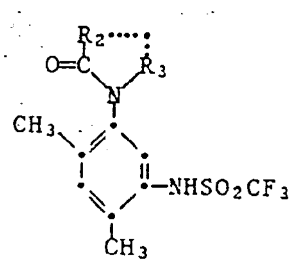

(II)

wherein $R_2$ and $R_3$ together are a 2- to 5-membered alkylene bridge that can be mono- or polysubstituted by $C_1$-$C_4$alkyl.

4. A composition according to claim 1, which comprises a cyclohexanedionecarboxylic acid derivative of formula I

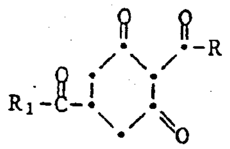

(I)

wherein R is $C_1$-$C_4$alkyl or $C_3$-$C_6$cycloalkyl and $R_1$ is hydroxyl or $C_1$-$C_6$alkoxy and as mixing partner a compound selected from 5-(trifluoromethanesulfonamido)-aceto-2,4-xylidide and 5-(trifluoromethanesulfonamido)-2,4-dimethylphenylpyrrolidin-2-one.

5. A composition according to claim 1, which comprises as active ingredient a mixture of 4-cyclopropanoyl-3,5-cyclohexanedione-1-carboxylic acid ethyl ester on the one hand and 5-(trifluoromethanesulfonamido)-aceto-2,4-xylidide or 5-(trifluoromethanesulfonamido)-2,4-dimethylphenylpyrrolidin-2-one on the other hand.

6. A composition according to claim 1, which comprises as active ingredient a mixture of 4-cyclopropanoyl-3,5-cyclohexanedione-1-carboxylic acid ethyl ester and 5-(trifluoromethanesulfonamido)-aceto-2,4-xylidide.

7. A composition according to claim 1, which comprises as active ingredient a mixture of 4-cyclopropanoyl-3,5-cyclohexanedione-1-carboxylic acid ethyl ester and 5-(trifluoromethanesulfonamido)-2,4-dimethylphenylpyrrolidin-2-one.

8. A composition according to claim 1, which comprises as active ingredient a mixture of 4-propionyl-3,5-cyclohexanedione-1-carboxylic acid ethyl ester on the one hand and 5-(trifluoromethanesulfonamido)-aceto-2,4-xylidide or 5-(trifluoromethanesulfonamido)-2,4-dimethylphenylpyrrolidin-2-one on the other hand.

9. A composition according to claim 1, which comprises as active ingredient a mixture of 4-propionyl-3,5-cyclohexanedione-1-carboxylic acid ester and 5-(trifluoromethanesulfonamido )-2,4-dimethylphenylpyrrolidin-2-one.

10. A composition according to claim 1, which comprises as active ingredient a mixture of 4-cyclopropanoyl-3,5-cyclohexanedione-1-carboxylic acid ethyl ester and 5-(trifluoromethanesulfonamido)-aceto-2,4-xylidide.

11. A composition according to claim 1, which comprises the active components I and II in a ratio in the range of from 100:1 to 1:10, preferably a ratio in the range of from 10:1 to 1:1.

12. A method of regulating or inhibiting plant growth beyond the 2-leaf stage, which method comprises treating plants, parts of plants or seeds with an effective amount of a composition according to claim 1.

13. A method of inhibiting the growth of grasses, mixed vegetation and weeds, which method comprises applying to lawns or an area covered with grass and/or weeds an effective amount of a composition according to claim 1.

14. The use of a composition according to claim 1 for regulating plant growth in crops of sugar cane, cereals, maize, soybeans, rice and cotton or in cover-crop leguminosae.

15. Use of a composition according to claim 1 for inhibiting growth in order to increase the resistance to bending and shorten the stalks in the cereal crops oats, wheat, rye and barley and to increase the resistance to lodging and increase the yield in crops of soybeans.

## Revendications

1. Un produit régulateur de la croissance des végétaux, caractérisé en ce qu'il contient en tant que composant actif, avec des additifs inertes, un mélange de
a) un dérivé d'acide cyclohexane-dione-carboxylique de formule I

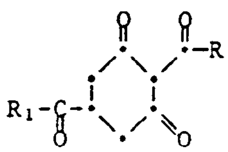

(I),

dans laquelle
R représente un groupe alkyle en $C_1$-$C_4$ ou cycloalkyle en C 3-C 6, $R_1$ représente un groupe hydroxy, alcoxy en C 1-C 6, halogénoalcoxy en C 1-C 6, alcoxylalcoxy en C 2-C 10, alkylthioalcoxy en C 2-C 10, alcényloxy en C 3-C 6, ou un sel métallique ou d'ammonium d'un tel dérivé, toléré par les végétaux, et
b) un 5-(trifluorométhane-sulfonamido)-acéto-2,4-xylidide de formule II

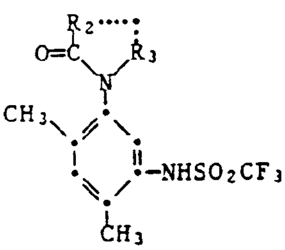

(II)

dans laquelle $R_2$ et $R_3$ représentent chacun un atome d'hydrogène ou un groupe alkyle en C 1-C 4, $R_2$ et $R_3$ forment ensemble un pont alkylène de 2 à 5 chaînons qui peut porter un ou plusieurs substituants alkyle en C 1-C 4.

2. Produit selon revendication 1, caractérisé en ce qu'il contient un dérivé d'acide cyclohexane-dione-carboxylique de formule I

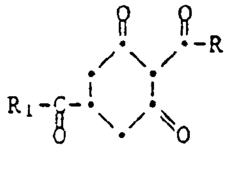

(I)

dans laquelle R représente un groupe alkyle en C 1-C 4 ou cycloalkyle en C 3-C 6 et $R_1$ représente un groupe hydroxy ou -alcoxy en C 1-C 6, en mélange avec un 5-(trifluorométhane-sulfonamido)-acéto-2,4-xylidide de formule

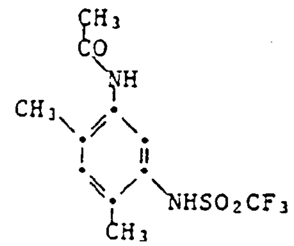

.

3. Produit selon la revendication 1, caractérisé en ce qu'il contient un dérivé d'acide cyclohexane-dione-carboxylique de formule I

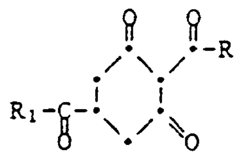

(I)

dans laquelle R représente un groupe alkyle en C 1-C 4 ou cycloalkyle en C 3-C 6 et $R_1$ représente un groupe hydroxyalkyle ou alcoxy en C 1-C 6, en mélange avec un 5-(trifluorométhane-sulfonamido)-acéto-2,4-xylidide de formule II

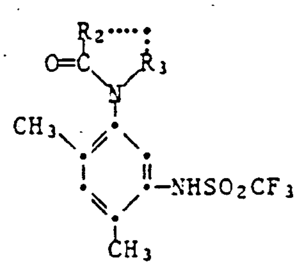

(II)

dans laquelle $R_2$ et $R_3$ forment ensemble un pont alkylène de 2 à 5 chaînons qui peut porter un ou plusieurs substituants alkyle en C 1-C 4.

4. Produit selon revendication 1, caractérisé en ce qu'il contient un dérivé d'acide cyclohexane-dione-carboxylique de formule I

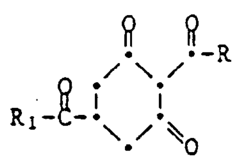

(I)

dans laquelle R représente un groupe alkyle en C 1-C 4 ou cycloalkyle en C 3-C 6 et $R_1$ représente un groupe hydroxy ou alcoxy en C 1-C 6, en mélange avec un composé choisi parmi le 5-(trifluorométhane-sulfonamido)-acéto-2,4-xylidide et la 5-(trifluorométhane-sulfonamido)-2,4-diméthylphényl-pyrrolidine-2-one.

5. Produit selon revendication 1, caractérisé en ce qu'il contient en tant que composant actif un mélange de 4-cyclopropanoyl-3,5-cyclohexane-dione-1-carboxylate d'éthyle d'une part et de 5-(trifluorométhanesulfonamido)-acéto-2,4-xylidide ou de 5-(trifluorométhanesulfonamido)-2,4-diméthylphényl-pyrrolidine-2-one d'autre part.

6. Produit selon la revendication 1, caractérisé en ce qu'il contient en tant que composant actif un mélange

de 4-cyclopropanoyl-3,5-cyclohexane-dione-1-carboxylate d'éthyle et de 5-(trifluorométhane-sulfonamido)-acéto-2,4-xylidide.

7. Produit selon revendication 1, caractérisé en ce qu'il contient en tant que composant actif un mélange de 4-cyclopropanoyl-3,5-cyclohexane-dione-1-carboxylate d'éthyle et de 5-(trifluorométhane-sulfonamido)-2,4-diméthylphényl-pyrrolidine-2-one.

8. Produit selon revendication 1, caractérisé en ce qu'il contient en tant que composant actif un mélange de 4-propionyl-3,5-cyclohexane-dione-1-carboxylate d'éthyle d'une part et de 5-(trifluorométhanesulfonamido)-acéto-2,4-xylidide ou de 5-(trifluorométhanesulfonamido)-2,4-diméthylphényl-pyrrolidine-2-one d'autre part.

9. Produit selon revendication 1, caractérisé en ce qu'il contient en tant que composant actif un mélange d'un ester 4-propionyl-3,5-cyclohexane-dione-1-carboxylique et de 5-(trifluorométhane-sulfonamido)-2,4-diméthylphényl-pyrrolidine-2-one.

10. Produit selon revendication 1, caractérisé en ce qu'il contient en tant que composant actif un mélange de 4-cyclopropanoyl-3,5-cyclohexane-dione-1-carboxylate d'éthyle et de 5-(trifluorométhane-sulfonamido)-acéto-2,4-xylidide.

11. Produit selon revendication 1, contenant les substances actives individuelles I et II dans des proportions relatives de 100:1 à 1:10, de préférence de 10:1 à 1:1.

12. Procédé pour la régulation ou l'inhibition de la croissance des végétaux au-delà du stade 2 feuilles, caractérisé en ce que l'on traite les végétaux, des parties des végétaux ou les semences par une quantité efficace du produit selon revendication 1.

13. Procédé pour inhiber la croissance des graminées, des végétations mélangées et des végétaux adventices, caractérisé en ce que l'on applique une quantité efficace du produit selon revendication 1 sur des gazons ou sur la surface plantée en graminées ou infestée par des végétaux adventices.

14. Utilisation du produit selon revendication 1 pour la régulation de la croissance des végétaux dans les cultures de canne à sucre, de céréales, de maïs, de soja, de riz ou de coton ou pour la régulation de la croissance des légumineuses de couvertures de sol.

15. Utilisation du produit selon revendication 1 pour l'inhibition de croissance visant à un accroissement de la résistance à "la verse" et à un raccourcissement des tiges des céréales avoine, blé, seigle ou orge, et à un accroissement de la résistance et du rendement des cultures de soja.